# EUROPÄISCHE PATENTANMELDUNG

(11) **EP 3 115 305 A1**
(43) Veröffentlichungstag der Anmeldung: **11.01.2017**
(21) Anmeldenummer: 16185267.8
(22) Anmeldetag: 12.07.2013
(51) Int. Cl.: B65B 43/50, B65G 47/84, B67C 7/00

(54) **VORRICHTUNG ZUM FÜHREN VON BEHÄLTERN**

(30) Priorität: 12.07.2012 DE 102012106263
(62) Teilanmeldung aus: 13176245.2
(71) Anmelder: KRONES AG, 93073 Neutraubling (DE)
(72) Erfinder: Buchhauser, Klaus, 93073 Neutraubling (DE); Schönfelder, Markus, 93073 Neutraubling (DE)
(74) Vertreter: Nordmeyer, Philipp Werner

(57) **Zusammenfassung**

Die vorliegende Erfindung betrifft eine Vorrichtung (1) zum Führen von Behältern (2) in einer Abfüllanlage, bevorzugt zum Führen von Flaschen in einer Getränkeabfüllanlage, umfassend einen Führungsstern (3', 3'') mit mindestens einer Behälteraufnahmetasche (30) zur Aufnahme eines Behälters (2), wobei der Führungsstern (3', 3'') um eine Drehachse (300) drehbar ist, wobei eine Aussenführung (4) mit einer geneigten Führungsfläche zur Führung der Behälter (2) vorgesehen ist.

## Beschreibung

### Technisches Gebiet

Die vorliegende Erfindung betrifft eine Vorrichtung zum Führen von Behältern in einer Abfüllanlage, bevorzugt zum Führen von Flaschen in einer Getränkeabfüllanlage.

### Stand der Technik

Im Bereich der Vorrichtungen zum Führen von Behältern in Abfüllanlagen, insbesondere zum Führen von zu befüllenden Flaschen in Getränkeabfüllanlagen, ist es bekannt, die Flaschen am Flaschenhals beziehungsweise am Halsring zu führen. Der Flaschenrumpf wird dann insbesondere in einem Rundläuferfüller oder einem Verschließer über eine zusätzliche Rumpfführung geführt, um sicherzustellen, dass sich die Flasche beim Befüllvorgang oder beim Verschließvorgang in einer exakten Ausrichtung befindet.

Die Führungsgarnituren herkömmlicher Anlagen sind üblicherweise so ausgebildet, dass sie nur für eine vorgegebene Flaschengeometrie passen, also insbesondere für eine einzige Flaschenhöhe und einen einzigen Durchmesser des Flaschenrumpfes. Wenn in einer Getränkeabfüllanlage dann ein anderer Flaschentypus befüllt werden soll, so muss die Führungsgarnitur ausgetauscht werden, um zumindest die Rumpfführung an die neue Geometrie der zu befüllenden Flasche anzupassen. Ein entsprechendes Auswechseln der jeweiligen Führungsgarnituren erfordert jedoch üblicherweise einen Eingriff in einen Reinraum oder eine sonstige Maschineneinhausung, in welchem die Führungsgarnitur angeordnet ist, wodurch entsprechend ein Reinigungszyklus ausgelöst wird. Daher ist ein entsprechender Wechsel der Führungsgarnituren zur Einrichtung der Vorrichtung zum Fördern von Flaschen unterschiedlicher Geometrien in den herkömmlichen Anlagen relativ zeitaufwändig.

Aus dem Stand der Technik sind entsprechend Führungsgarnituren bekannt, welche einen Führungsstern mit einstellbaren Taschengrößen aufweisen. Hierzu kann eine automatische und motorische Einstellung der Taschengrößen auf die zu führenden Behälter vorgesehen sein, so dass die Einstellung entsprechend ohne Eingriff in den Reinraum durchgeführt werden kann.

Aus der DE 601 14 777 T2 ist eine solche Vorrichtung zur Übergabe von Behältern mit einem Führungsrad variabler Geometrie bekannt, wobei die Veränderung der Dimensionen der Behälteraufnahmetaschen hier durch die Relativverstellung übereinanderliegender, konzentrischer Platten, zwischen welchen ein Riemen gespannt ist, ausgeführt wird.

In einer weiteren Ausführungsform sind Führungssterne mit verstellbaren Behälteraufnahmetaschen bekannt, bei welchen die Behälteraufnahmetaschen bezüglich ihrer Aufnahmeweite über Zahnradsegmente, einen umlaufenden Ring und einen mitfahrenden Motor verstellt werden können.

Obwohl die vorgenannten verstellbaren Führungssterne die Aufgabe der Verstellung der Behälteraufnahmetaschen zuverlässig lösen und entsprechend eine Umrüstung der Vorrichtung zum Führen der Behälter ohne Eingriff in den Reinraum durch Ansteuerung der jeweiligen Verstellmotoren durchgeführt werden kann, sind die aus dem Stand der Technik bekannten verstellbaren Führungssterne mit einer aufwändigen Mechanik und vielen Lagerstellen versehen, so dass die Reinigung kompliziert ist und stellenweise nicht automatisch durchgeführt werden kann. Damit ist der Einsatz dieser Führungssterne in aseptischen Anlagen arbeitsaufwändig.

### Darstellung der Erfindung

Entsprechend ist es eine Aufgabe der vorliegenden Erfindung, eine Vorrichtung zum Führen von Behältern unterschiedlicher Geometrien anzugeben, welche einfacher zu reinigen ist.

Die genannte Aufgabe wird durch eine Vorrichtung zum Führen von Behältern in einer Abfüllanlage mit den Merkmalen des Anspruchs 1 gelöst. Vorteilhafte Weiterbildungen ergeben sich aus den Unteransprüchen.

Entsprechend wird eine Vorrichtung zum Führen von Behältern in einer Abfüllanlage vorgeschlagen, bevorzugt zum Führen von Flaschen in einer Getränkeabfüllanlage, welche einen Führungsstern mit mindestens einer Behälteraufnahmetasche zur Aufnahme eines Behälters umfasst, wobei der Führungsstern um eine Drehachse herum drehbar ist. Erfindungsgemäß verjüngt sich die mindestens eine Behälteraufnahmetasche in Richtung der Drehachse. Am Führungsstern können dabei auch über den Behälteraufnahmetaschen Behälterbehandlungsorgane wie beispielsweise Desinfektionsdüsen, Fülleinrichtungen oder Verschließeinrichtungen angeordnet sein.

Dadurch, dass der Führungsstern Behälteraufnahmetaschen umfasst, welche sich verjüngen, können Behälter und insbesondere Flaschen unterschiedlichen Durchmessers und unterschiedlicher Geometrie in den Behälteraufnahmetaschen geführt werden. Die unterschiedlichen Behälterdurchmesser werden entsprechend aufgrund der sich verjüngenden Form der Behälteraufnahmetaschen aufgenommen, so dass der Führungsstern im Bodenbereich der Behälter oder aber im Übergangsbereich vom Flaschenrumpf zum Flaschenhals zur Führung von Flaschen unterschiedlicher Durchmesser und Geometrien verwendet werden kann. Durch die sich verjüngende Form kann auf eine mechanische Verstellung der Behälteraufnahmetaschen verzichtet werden, so dass die vorgeschlagene Vorrichtung auf eine motorische Verstellung der Behälteraufnahmetaschen verzichten kann. Entsprechend ist die mechanische Ausgestaltung des Führungssterns gegenüber den herkömmlichen verstellbaren Führungssternen deutlich vereinfacht, wodurch die Reinigung des vorgeschlagenen Führungssterns einfacher ist.

Bevorzugt ist die Behälteraufnahmetasche im Wesentlichen konisch. Auf diese Weise kann eine sich verjüngende Form der Behälteraufnahmetaschen erreicht werden, die durch einen einfachen Kegelstumpf beschrieben werden kann. Entsprechend können Behälter mit unterschiedlichen Geometrien aufgenommen werden, welche entsprechend unterschiedlich tief in die sich verjüngenden Behälteraufnahmetaschen eintauchen.

Bei der Führung von Behältern unterschiedlicher Durchmesser in den sich verjüngenden Behälteraufnahmetaschen findet entsprechend die eigentliche Führung beziehungsweise der Kontakt zwischen dem jeweiligen Rumpfbereich der Behälter und der sich verjüngenden Behälteraufnahmetasche in unterschiedlichen Ebenen statt. Beispielsweise findet bei einem perfekt runden Boden einer Flasche eines ersten Durchmessers und einem zweiten perfekt runden Boden einer Flasche eines zweiten Durchmessers ein Kontakt lediglich in einer ringförmigen Linie innerhalb einer konischen Aufnahmetasche statt, wobei die beiden ringförmigen Linien der unterschiedlichen Flaschen in unterschiedlichen Ebenen innerhalb des Konus liegen.

Entsprechend können Behälter unterschiedlichen Durchmessers in den sich verjüngenden beziehungsweise konischen Behälteraufnahmetaschen sicher geführt werden, ohne dass ein mechanisch aufwändiger Verstellmechanismus zur Verstellung des jeweiligen Durchmessers beziehungsweise der Weite der Behälteraufnahmetaschen notwendig wäre. Damit wird die Reinigungsfähigkeit aufgrund des Wegfalls einer Vielzahl an Einzelteilen und Lagerstellen deutlich verbessert.

In einer vorteilhaften Weiterbildung weist die Behälteraufnahmetasche Kegelstumpfflächen mit einer Steigung von 1:5 auf und hat entsprechend eine Neigung von 10° bis 12°, bevorzugt von 11,31 °, gegenüber der Drehachse. Mit einer solchen Neigung können Behälter unterschiedlichster geometrischer Ausbildungen im Förderstern gefördert werden.

Der Winkel beziehungsweise die Neigung der Behälteraufnahmetaschen ist jedoch nicht allein auf diesen angegebenen Wert festgelegt, sondern kann so gewählt werden, dass ein günstiges Verhältnis zwischen einer möglichst geringen Höhenverstellung zum Rüsten für eine weitere Behältergeometrie bei gleichzeitig stabiler Führung entsteht. Eine möglichst schnelle Einstellbarkeit wird durch einen möglichst flachen Winkel erreicht. Gleichzeitig muss jedoch noch eine stabile Innenführung erreicht werden, was durch eine möglichst steile Neigung erreicht wird. Entsprechend wird die Neigung auf der Grundlage dieser Randbedingungen ausgewählt.

Der Führungsstern hat eine entsprechende Ausdehnung in Richtung der Drehachse - beziehungsweise eine entsprechende Dicke - welche die Ausbildung der sich verjüngenden Behälteraufnahmetaschen erlaubt. Dabei ist der Führungsstern in Richtung der Drehachse bevorzugt zumindest so weit ausgedehnt, dass in der Behälteraufnahmetasche Behälter mit mindestens zwei unterschiedlichen Durchmessern gehalten werden können.

Hieraus ergeben sich gut zu reinigende und einfache Geometrien, nämlich ein Führungsstern, welcher einteilig oder aus mehreren Segmenten ausgebildet ist und lediglich in seinem Umfangsbereich die sich verjüngenden beziehungsweise konischen Behälteraufnahmetaschen ausbildet. Entsprechend können hier sehr einfache Geometrien verwendet werden, welche mit glatten Oberflächen ausgebildet werden können, die entsprechend einfach zu reinigen sind.

Durch den genannten Führungsstern mit den sich verjüngenden beziehungsweise konischen Behälteraufnahmetaschen wird entsprechend eine Innenführung für die Behälter ausgebildet.

Vorteilhaft ist auch eine Außenführung mit einer Führungsfläche zur Führung des Behälters in der Behälteraufnahmetasche konzentrisch in mindestens einem Abschnitt um den Führungsstern herum angeordnet, bevorzugt in einem Abschnitt, welcher dem Behandlungswinkel entspricht. Das gleichzeitige Führen des jeweiligen zu führenden Behälters an der Innenführung, welche durch den Führungsstern mit den sich verjüngenden Behälteraufnahmetaschen ausgebildet ist, und an der Außenführung, welche mit einer Führungsfläche ausgebildet ist, ermöglicht eine exakte Führung der Behälter. Insbesondere bei einem runden Flaschenboden eines ersten Durchmessers und einem runden Flaschenboden eines zweiten Durchmessers wird eine Führung jeweils entlang einer Führungslinie in der konischen Behälteraufnahmetasche sowie einem Kontaktpunkt an der konischen Außenführung erreicht, wobei abhängig vom Durchmesser des jeweiligen zu führenden Behälters, die entsprechenden Punkte beziehungsweise Kontaktlinien in unterschiedlichen Ebenen liegen.

Bevorzugt ist die Führungsfläche gegenüber der Drehachse geneigt und bevorzugt konisch ausgebildet, so dass der jeweilige Behälter sowohl in der Innenführung als auch in der Außenführung durch jeweils konische Führungsflächen geführt ist. Damit ist die Vorrichtung zur Führung der Behälter aber für die Aufnahme von Behältern unterschiedlichster Geometrien ausgebildet, da sich lediglich die jeweiligen Kontaktbereiche mit den konischen Führungsflächen auf unterschiedlichen Ebenen entlang der Richtung der Drehachse verschieben, an dem Führungsstern und der Außenführung aber prinzipiell nichts geändert werden muss, um diese unterschiedlichen Geometrien aufnehmen zu können.

In einer bevorzugten Weiterbildung weist die Führungsfläche der Außenführung die gleiche Neigung auf, wie die Behälteraufnahmetasche. Mit anderen Worten wird in dieser Ausführungsform eine "V"-förmige Aufnahme zwischen der Außenführung und der Führungsfläche ausgebildet, wobei in einer radialen Schnittdarstellung die Winkel der Führungsfläche und der Behälteraufnahmetasche gleich sind. Auf diese Weise kann eine weitgehend symmetrische Aufnahme des Behälters erreicht werden.

In einer Variante ist die Neigung der Behälteraufnahmetasche geringer, als die Neigung der Führungsfläche der Außenführung. Durch die steilere Außenführung können die Zentrifugalkräfte, welche in einer Rundläufermaschine auf die Behälter wirken, besser abgefangen werden. Bevorzugt wird die steilere Neigung gewählt, um sicherzustellen, dass die jeweiligen Behälter aufgrund der in der Vorrichtung zum Führen von Behältern auftretenden Fliehkräfte nicht verrutschen. Weiterhin kann durch eine steilere Anordnung der Außenführung erreicht werden, dass der Kontaktpunkt zwischen dem Behälter und der Außenführung an dem jeweiligen Behälter relativ höher liegt und entsprechend die Wahrscheinlichkeit höher ist, dass hier ein genau rotationssymmetrischer Bereich des jeweiligen Behälters abgestützt wird. Beispielsweise bei Petaloidböden von Flaschen, welche entsprechend fünf Füßchen aufweisen, kann bei einem zu niedrig liegenden Kontaktpunkt zwischen der Außenführung und der Flasche ein variierender Kontaktpunkt an der Flasche erreicht werden, so dass eine eindeutige Führung der Flasche nicht erreicht wird.

In einer weiteren Ausführungsform weist die Außenführung eine auf die Behälteraufnahmetaschen vorgespannte Führungsfläche auf, welche den Behälter in der Behälteraufnahmetasche führt, wobei die Führungsfläche bevorzugt flexibel und/oder federnd gelagert ist. Mittels der Vorspannung kann eine sichere Führung der Behälter in den Behälteraufnahmetaschen erreicht werden.

Bevorzugt weist die Behälteraufnahmetasche einen Öffnungswinkel von 160° bis 240°, bevorzugt von 180° bis 220°, besonders bevorzugt von 180° oder 216°, auf. Prinzipiell sind die Taschen koaxial zu den aufzunehmenden Behältern ausgebildet, wobei die Behältermittelachsen entsprechend mit den Mittelachsen der Behälteraufnahmetaschen zusammenfallen und diese Mittelachsen entsprechend auf dem Teilkreis des Führungssterns liegen. Bei einer Ausbildung des Öffnungswinkels von 180° für die Behälteraufnahmetaschen liegt entsprechend auch der Außendurchmesser des Führungssterns auf dem Teilkreis.

Eine einfachere Übergabe der geführten Flaschen wird mit einem größeren Öffnungswinkel erreicht, wodurch dann die entsprechenden Mittelachsen der Taschen und damit der Teilkreis radial bezüglich der Außenkante des Führungssternes nach außen rücken. Bei asymmetrischen Flaschenböden ist hier jedoch eine Begrenzung dahingehend gegeben, dass zumindest zwei Punkte des jeweiligen Flaschenbodens mit der sich verjüngenden Fläche der Behälteraufnahmetasche vorliegen müssen. Beispielsweise bei den genannten Petaloidflaschen mit fünf regelmäßig verteilten Füßen ist das Maximum des Öffnungswinkels entsprechend bei 216°, so dass entsprechend beinahe drei der Füße gehalten werden. Bei einer ebenen runden Flaschenkontur jedoch gibt es stets eine ringförmige Kontaktstelle, so dass dann der Öffnungswinkel noch größer sein kann.

In einer weiteren Variante kann der Öffnungswinkel auch kleiner als 180° sein, wobei dann die Mittelachsen der jeweiligen Behälteraufnahmetaschen und damit der Teilkreis radial nach innen wandern. Bei einer solchen Ausbildung kann möglicherweise auf die Außenführung verzichtet werden, es muss jedoch bei der Übergabe darauf geachtet werden, dass die jeweiligen Behälter in dem Führungsstern ohne die Überbrückung eines Höhenunterschiedes eingeschoben werden können, um den entsprechenden Führungsmechanismus nicht zu verkomplizieren.

Der Führungsstern sowie die Außenführung sind bevorzugt unabhängig voneinander entlang der Drehachse verschiebbar, bevorzugt mittels eines aseptischen, also einfach reinigbaren und sterilisierbaren Spindeltriebes. Durch eine Verschiebung des Führungssterns relativ zu der Außenführung kann eine exakte Zentrierung der Behälterachse erreicht werden, so dass die Behälterachse genau mit dem Teilkreis zusammenfällt und entsprechend der Behälter so geführt wird, dass ein zuverlässiges Behandeln oder Transportieren des Behälters mit einer vorgegebenen Ausrichtung erreicht werden kann.

Bevorzugt sind der Führungsstern und die Außenführung auch relativ zu einer Halsführung verschiebbar, so dass auf diese Weise eine exakte Anpassung an die Höhe des jeweils geförderten Behälters stattfindet. Entsprechend kann so eine exakte Einstellung der Aufnahme des jeweiligen Flaschentyps derart erreicht werden, dass die Flasche sowohl in der Halsführung geführt wird, als auch in ihrem Rumpfbereich in der beschriebenen Vorrichtung zum Führen der Flaschen gehalten wird.

In einer bevorzugten Ausführungsform findet die Höheneinstellung sowohl des Führungssterns als auch der Außenführung automatisch beim Wechseln auf eine andere Flaschengeometrie in der jeweiligen Fülllinie statt. Hierzu werden lediglich die Außenführung sowie der Führungsstern relativ zu der Halsführung in ihrer Höhe so verstellt, dass der Behälterboden wieder konzentrisch unter der Halsführung auf dem Teilkreis liegt, sowie in der richtigen Höhe bezüglich der Halsführung gehalten wird. Eine solche Umrüstung ist innerhalb weniger Minuten durchzuführen und insbesondere auch ohne Eingriff in den Reinraum einer Aseptikanlage. Entsprechend kann die Umrüstung von einem Flaschentyp zu einem weiteren Flaschentyp schnell und ohne Eingriff von außen und lediglich durch eine Höhenverstellung des Führungssterns und der Außenführung stattfinden.

Weiterhin ist die Reinigung der vorgenannten Vorrichtung zum Führen von Behältern besonders einfach, da nur die im Wesentlichen glatten Oberflächen des Führungssterns mit den sich verjüngenden Behälteraufnahmetaschen, sowie die glatten Oberflächen der konzentrischen Außenführung gereinigt werden müssen.

Die Außenführung kann als flexibles oder federnd gelagertes dünnes Blech ausgeführt sein, oder aber als Kunststoffteil. Der Führungsstern mit den sich verjüngenden Behälteraufnahmetaschen ist ebenfalls bevorzugt als Kunststoffteil ausgebildet, kann aber auch aus einem Metall ausgebildet sein, um eine einfache Reinigung zu unterstützen.

In einer Variante ist die Behälteraufnahmetasche des Führungssterns zur Aufnahme eines Halsbereichs eines Behälters vorgesehen. Unter Halsbereich ist ein Bereich des Behälters zu verstehen, der einen Behälterhals und/oder eine Behälterschulter aufweist. Mit anderen Worten kann die Vorrichtung auch in der umgekehrten Anordnung von Förderstern und Außenführung - sozusagen "auf den Kopf gestellt" - verwendet werden und stützt dann nicht den Behälterboden ab, sondern fungiert als Halsführung.

In einer Weiterbildung ist über dem Führungsstern eine Halsführung zur Führung eines in einer Behälteraufnahmetasche angeordneten Behälters an dessen Halsbereich vorgesehen, und der Führungsstern führt den Behälter an dessen Rumpfbereich. Dabei sind mit Vorteil der Führungsstern und/oder die Außenführung relativ zur Halsführung entlang der Drehachse verschiebbar. Auf diese Weise kann der zu führende Behälter sicher an der Halsführung und am Führungsstern gehalten und geführt werden.

Die Form der sich verjüngenden Behälteraufnahmetasche ist bevorzugt so ausgebildet, dass die Verjüngung in die von dem Flaschenhals fort zeigende Richtung vorgesehen ist. Die sich verjüngende Form muss nicht zwangsläufig eine geradlinige Form, so wie beispielsweise eine konische Form, sein, sondern es können auch andere Profile verwendet werden, so wie beispielsweise konkave oder konvexe Profile oder anderweitig geformte Profile, welche zur Aufnahme der jeweiligen Behälter, bevorzugt an deren Boden oder auch am Übergangsbereich zwischen Hals und Rumpf der Flasche, eine zuverlässige Führung ermöglichen.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch eine perspektivische Darstellung einer Vorrichtung zum Führen von Behältern in einer ersten Ausführungsform;
- Figur 2: eine schematische Schnittansicht in einer radialen Ebene durch eine Behälteraufnahmetasche in der Vorrichtung aus Figur 1;
- Figur 3: eine schematische, perspektivische Ansicht einer Vorrichtung zum Führen von Behältern gemäß Figuren 1 und 2, wobei weiterhin eine Halsführung umfasst ist;
- Figur 4: eine schematische, perspektivische Ansicht einer Vorrichtung zum Führen von Behältern in einer zweiten Ausführungsform;
- Figur 5: eine schematische Schnittansicht in einer radialen Ebene durch eine Behälteraufnahmetasche der in Figur 4 gezeigten Vorrichtung mit einem Behälter einer ersten Behältergeometrie; und
- Figur 6: eine schematische Querschnittsansicht durch eine Behälteraufnahmetasche der in den Figuren 4 und 5 gezeigten Ausführungsform bei Aufnahme einer zweiten Behältergeometrie.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen in der Beschreibung zu vermeiden.

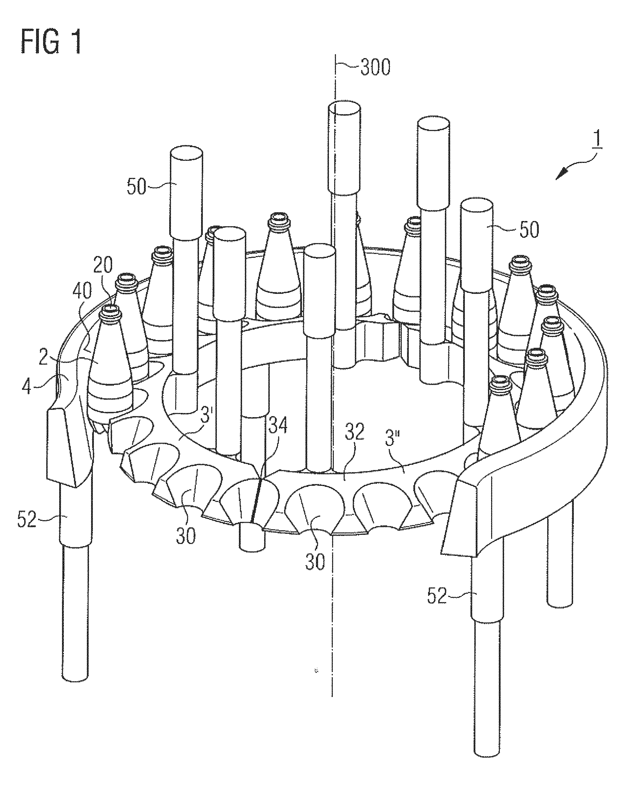

Figur 1 zeigt eine Vorrichtung 1 zum Führen von Behältern 2 in einer Abfüllanlage, wobei die Vorrichtung 1 einen Führungsstern 3 umfasst, welcher Behälteraufnahmetaschen 30 aufweist, die zum Führen der Behälter 2 dienen. Die Behälter 2 sind in der Figur in Form von PET-Flaschen gezeigt, welche während eines Füllvorganges geführt werden sollen.

Die in der Figur gezeigte Führung der Behälter 2 durch den Führungsstern 3 greift dabei in deren unterem Bereich an, so dass beispielsweise eine exakte Führung des Behälterbodens erreicht werden kann. Weiterhin kann durch die Führung der Behälter 2 an deren unterem Bereich eine genaue Ausrichtung der Behältermitte bezüglich der Mündung 20 des Behälters 2 erreicht werden.

In Figur 1 ist aus Gründen der Übersichtlichkeit eine im oberen Bereich der Behälter angreifende Führung, welche beispielsweise als Halsführung ausgebildet sein kann, nicht gezeigt. Eine solche Führung der Behälter 2 ist nicht unbedingt erforderlich, häufig aber erwünscht, um ein gezieltes Zuführen der Behälter 2 beispielsweise zu Füllorganen oder zu Verschließelementen zu erreichen.

Die Behälteraufnahmetaschen 30 des Führungssternes 3 verjüngen sich in dem in Figur 1 gezeigten Ausführungsbeispiel in Richtung der Drehachse 300 des Führungssterns 3 und sind in dem gezeigten Ausführungsbeispiel konisch ausgebildet. Auch wenn dies in den Figuren nicht explizit gezeigt ist, so sind auch andere sich verjüngende Formen der Oberflächen der Behälteraufnahmetaschen 30 des Führungssterns 3 denkbar, welche beispielsweise entlang der Drehachse in konvexen, konkaven oder anderweitig gebogenen Querschnitten resultieren. Die sich in Richtung der Drehachse 300 verjüngenden Behälteraufnahmetaschen 30 dienen dazu, in einer bestimmten Ebene senkrecht zur Richtung der Drehachse 300 einen Durchmesser auszubilden, welcher mit einem zu führenden Behälter 2 so übereinstimmt, dass eine sichere Führung gewährleistet ist. Dies ist typischer Weise beim gleichen Durchmesser von Behälteraufnahmetasche 30 und zu kontaktierendem Abschnitt des Behälters der Fall.

Dadurch, dass sich die Behälteraufnahmetasche 30 in Richtung der Drehachse 300 verjüngt, kann erreicht werden, dass in unterschiedlichen, senkrecht auf der Drehachse stehenden Ebenen der Behälteraufnahmetasche 30 Behälter 2 unterschiedlicher Durchmesser und Geometrien geführt werden können. Mit anderen Worten eignet sich die sich in Richtung der Drehachse 300 verjüngende Behälteraufnahmetasche 30 zur Führung von unterschiedlichen Behältern 2 unterschiedlicher Dimensionen und Geometrien, ohne dass der Führungsstern 3 hierfür ausgetauscht oder modifiziert werden müsste.

Um die sich verjüngende Behälteraufnahmetasche 30 ausbilden zu können, weist der Führungsstern 3 entsprechend eine solche Ausdehnung in Richtung der Drehachse 300 auf, welche eine entsprechende Ausführung der Behälteraufnahmetaschen 30 in der genannten sich verjüngenden Weise ermöglicht. Mit anderen Worten muss der Führungsstern 3 in Richtung der Drehachse 300 "dick" sein, um die sich verjüngenden Behälteraufnahmetaschen 30 aufnehmen zu können.

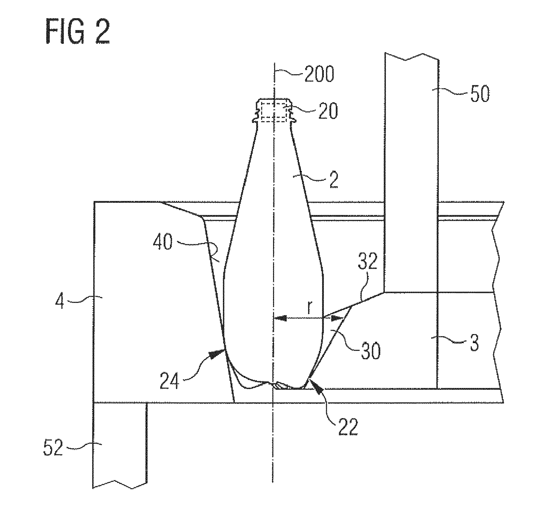

Durch eine konische Ausführung der Behälteraufnahmetasche 30 wird erreicht, wie sich beispielsweise aus Figur 2 ergibt, dass der Behälter 2 im Bereich eines entsprechenden Kontaktbereiches 22 mit der Behälteraufnahmetasche 30 in Kontakt kommt. Der Kontaktbereich 22 bildet in dem gezeigten Ausführungsbeispiel im Wesentlichen einen Ringabschnitt in der Wand des Behälters 2 aus. Mit anderen Worten liegt der Behälter 2 in einem ringförmigen Kontaktbereich 22 des Behälters 2 an der konischen Behälteraufnahmetasche 30 an.

In dem in Figur 1 gezeigten Ausführungsbeispiel verjüngt sich die Behälteraufnahmetasche 30 nach unten hin, so dass ein Behälter 2 - wie in der Figur gezeigt - an seinem unteren Bereich von unten durch die Behälteraufnahmetasche 30 geführt und gestützt wird.

Die konische Behälteraufnahmetasche 30 des Führungssternes 3 ist dabei so ausgestaltet, dass die Behälterachse 200 des Behälters 2 derart senkrecht auf dem Teilkreis des Führungssternes 3 geführt werden kann, dass die Mündung 20 des Behälters 2 stets zentriert zum Teilkreis geführt wird. Entsprechend ist auch die Mündung 20 des Behälters 2 stets plan ausgerichtet, so dass beispielsweise ein Füllorgan oder ein Verschließelement mit der Mündung 20 des Behälters 2 zuverlässig interagieren kann.

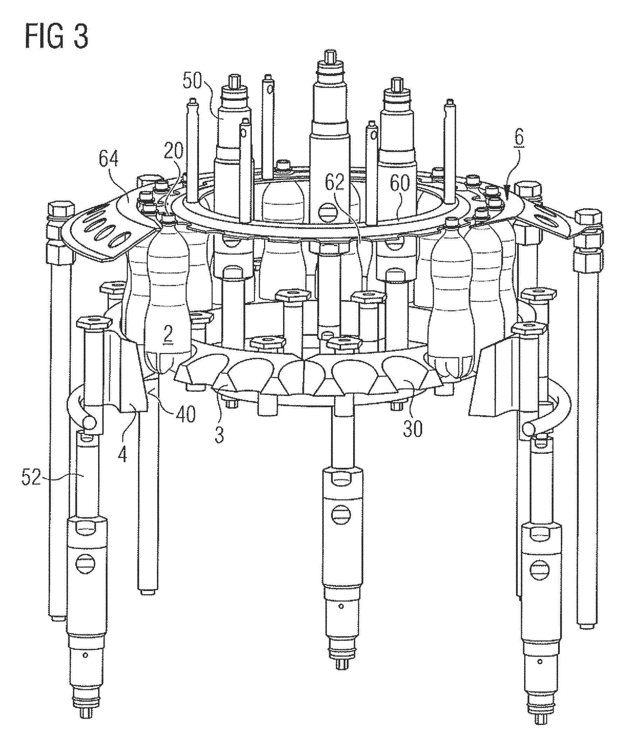

Der in Figur 1 gezeigte Führungsstern 3 stellt eine Innenführung für den jeweiligen Behälter 2 bereit. Da der Führungsstern 3 typischerweise gemeinsam mit einer beispielsweise in Figur 3 gezeigten Halsführung angetrieben ist, übernimmt er aber auch eine Förderung der Behälter 2 entlang des Teilkreises.

Wie sich beispielsweise aus den Figuren 1 und 2 ergibt, ist die Oberseite 32 des Führungssternes 3 abgeschrägt ausgebildet, so dass bei einem Reinigungsvorgang oder beim Überlaufen von abzufüllendem Produkt die Flüssigkeiten problemlos vom Führungsstern 3 ablaufen können. Auf diese Weise wird eine einfache Reinigung des Führungssternes 3 ermöglicht, wodurch die Eignung zum Einsatz in Aseptikanlagen verbessert wird.

Die konische Ausbildung der Behälteraufnahmetaschen 30 ermöglicht, wie sich beispielsweise sofort aus Figur 2 ergibt, die Führung von Behältern 2 unterschiedlicher Durchmesser.

Insbesondere variiert der in Figur 2 gezeigte Radius r zwischen der Behälterachse 200 und der Behälteraufnahmetasche 30 in unterschiedlichen Höhen entlang der Drehachse 300 des Führungssternes 3. Aufgrund der sich verjüngenden - hier konischen - Ausbildung der Behälteraufnahmetaschen 30 ist der Radius r im unteren Bereich entsprechend kleiner als im oberen Bereich der Führungstasche 30.

Der Führungsstern 3 kann bevorzugt aus einem Kunststoffmaterial oder einem Metall so hergestellt werden, dass im Wesentlichen nur glatte Flächen vorhanden sind, welche entsprechend einfach zu reinigen sind. In dem in den Figuren 1 und 2 gezeigten Ausführungsbeispiel ist der Führungsstern 3 aus einem Kunststoffmaterial hergestellt.

Der Führungsstern 3 ist weiterhin, wie sich aus Figur 1 ergibt, aus zwei Segmenten 3' und 3" zusammengesetzt, welche an dem Stoß 34 aneinander anstoßen. Selbstverständlich kann der Führungsstern 3 auch einstückig ausgebildet sein oder aus noch mehr Segmenten bestehen. Dies ist abhängig davon, wie der Führungsstern 3 hergestellt wird.

Die Behälter 2 werden in der Vorrichtung 1 auch mittels einer Außenführung 4 geführt, welche eine konzentrisch zur Drehachse 300 angeordnete Führungsfläche 40 aufweist. Die Führungsfläche 40 erstreckt sich nicht um den gesamten Umfang des Führungssterns 3, sondern ist nur in einem Abschnitt vorgesehen, welcher im Wesentlichen dem Behandlungswinkel entspricht. Die Führungsfläche 40 ist nicht in einem Umfangsbereich des Führungssterns 3 vorgesehen, in welchem eine Übergabe der Behälter 2 an den Führungsstern 3 von einem Einlaufstern, sowie eine Übergabe der Behälter 2 an einen Auslaufstern stattfindet.

Die Führungsfläche 40 der Außenführung 4 ist bevorzugt ebenfalls in Richtung der Drehachse 300 verjüngt ausgebildet und ist besonders bevorzugt konisch ausgebildet. Wie sich aus Figur 2 sofort ergibt, ist der Winkel beziehungsweise die Neigung der Führungsfläche 40 der Außenführung 4 in dem gezeigten Ausführungsbeispiel steiler, als die Neigung der sich verjüngenden Behälteraufnahmetasche 30. Entsprechend ist ein Kontaktpunkt 24 zwischen dem Behälter 2 und der Führungsfläche 40 der Außenführung 4 gegeben, welcher in einer anderen zur Behälterachse 200 senkrechten Ebene liegt, als der Kontaktbereich 22. Die Ausprägung als Kontaktpunkt 34 mit der Führungsfläche 40 der Außenführung 4 ergibt sich daher, weil der Durchmesser des Behälters 2 deutlich kleiner ist, als der Durchmesser der Führungsfläche 40 der Außenführung 4.

Über den Kontaktbereich 22 des Behälters 2 mit der Behälteraufnahmetasche 30 und dem Kontaktpunkt 24 des Behälters mit der Führungsfläche 40 der Außenführung 4 wird der Behälter 2 entsprechend an mindestens drei Punkten so stabil und zentriert gehalten, dass die Behälterachse 200 mit dem Teilkreis des Führungssternes 3 zusammenfällt und die Behälterachse 200 genau senkrecht gehalten werden kann.

Die Außenführung 4 ist in dem in Figuren 1 und 2 gezeigten Ausführungsbeispiel ebenfalls aus einem Kunststoffmaterial hergestellt. Die Außenführung 4 weist bevorzugt gerade Flächen auf, welche entsprechend eine einfache Reinigung ermöglichen.

Wie sich aus Figur 2 direkt ergibt, können somit Behälter 2 unterschiedlicher Durchmesser beziehungsweise Dimensionen in der Vorrichtung 1 zum Führen von Behältern 2 gehalten werden.

Neben den in den Figuren 1 und 2 gezeigten konischen Behälteraufnahmetaschen 30 sind auch andere, nicht geradlinig verlaufende Formen für die Behälteraufnahmetaschen 30 denkbar. Ebenfalls ist für die Führungsfläche 40 der Außenführung 4 denkbar, andere, nicht geradlinig verlaufende Formen zu wählen.

Um eine Einstellung der Aufnahme unterschiedlich dimensionierter Behälter 2 zwischen den Behälteraufnahmetaschen 30 und den Führungsflächen 40 zu erreichen, können sowohl der Führungsstern 3 als auch die Außenführung 4 mit der Führungsfläche 40 relativ zueinander entlang der Drehachse 300 verschoben werden. Hierzu ist ein Verstellmechanismus in Form von Stellzylindern 50 vorgesehen, welche den Führungsstern 3 tragen. Weiterhin sind Stellzylinder 52 vorgesehen, welche die Außenführung 4 tragen. Alternativ zu den Stellzylindern 50, 52 können auch andere Verstellmechanismen eingesetzt werden, wie beispielsweise Linearmotoren oder besonders vorteilhaft Spindeltriebe. Letztere sind in aseptischer Ausführung einfach reinigbar und auch sterilisierbar und haben den Vorteil, dass die Antriebsmotoren der Spindeltriebe außerhalb eines Behandlungsbereichs der Behälter angeordnet sein können.

Über ein entsprechendes Verfahren der Stellzylinder 50, 52 kann eine Relatiwerschiebung des Führungssterns 3 und der Außenführung 4 zueinander in Richtung der Drehachse 300 erreicht werden. Weiterhin kann auch eine gemeinsame Verschiebung des Führungssterns 3 und der Außenführung 4 um den gleichen Betrag und in die gleiche Richtung entlang der Richtung der Drehachse 300 durchgeführt werden. Die beiden unterschiedlichen Verstellarten haben unterschiedliche Wirkungen.

Bei einer gemeinsamen Verstellung des Führungssterns 3 und der Außenführung 4 wird eine Höheneinstellung beispielsweise gegenüber einer Halsführung erreicht, wobei dabei ein einmal eingestellter Durchmesser zwischen den Behälteraufnahmetaschen 30 und der Führungsfläche 40 erhalten bleibt. Entsprechend kann auf diese Weise auf unterschiedlich hohe Behälter 2 mit identischer Geometrie des unteren Bereichs reagiert werden.

In der Variante, dass der Führungsstern 3 relativ zur Führungsfläche 40 verschoben wird, kann eine Justage der Lage der Behälterachse 200 relativ zur Drehachse 300 beziehungsweise relativ zum Teilkreis vorgenommen werden. Durch eine relative Verschiebung der Behälteraufnahmetaschen 30 zu den Führungsflächen 40 werden nämlich die Abstände der jeweiligen Kontaktpunkte 24 beziehungsweise Kontaktbereiche 22 in der jeweiligen Ebene relativ zur Drehachse 300 individuell verändert, so dass hier eine Anpassung an die jeweilige Geometrie eines Behälters stattfinden kann. Dies ist besonders dann notwendig, wenn eine nicht-zylindrische Behälterform befüllt werden soll, so wie beispielsweise die in Figur 2 gezeigte Petaloidflasche. Hier ist es beispielsweise durch die unterschiedlichen Neigungen der Behälteraufnahmetasche 30 und der Führungsfläche 40 der Außenführung 4 notwendig, die beiden Komponenten unabhängig voneinander so einzustellen, dass die über den Kontaktpunkt 24 und den Kontaktbereich 22 aufgebrachten Stützkräfte die Petaloidflasche mit ihrer Behälterachse 200 genau auf dem Teilkreis halten.

In Figur 3 ist die Vorrichtung aus den Figuren 1 und 2 in Zusammenhang mit einer Halsführung 6 gezeigt, wobei die Halsführung 6 im Mündungsbereich 20 der jeweiligen Behälter 2 angreift. Die Höhe der Außenführung 4 sowie des Führungssternes 3 wird abhängig von den jeweiligen Dimensionen der Behälter 2 zum einen so eingestellt, dass der Boden des Behälters zwischen den Behälteraufnahmetaschen 30 und der Führungsfläche 40 sicher zentriert gehalten werden kann, gleichzeitig aber auch die Höhe des Behälters 2 so unterstützt wird, dass die Mündung 20 des Behälters 2 auf einer definierten Höhe sicher in der Halsführung 6 geführt wird. Die Halsführung 6 umfasst dabei einen Halsführungsstern 60 mit entsprechenden Aufnahmetaschen 62 zur Aufnahme der Mündungen, sowie eine entsprechende Außenführung 64. Die Mündungen 20 der Behälter 20 werden entsprechend zwischen dem Halsführungsstern 60 und der Außenführung 64 gehalten und geführt.

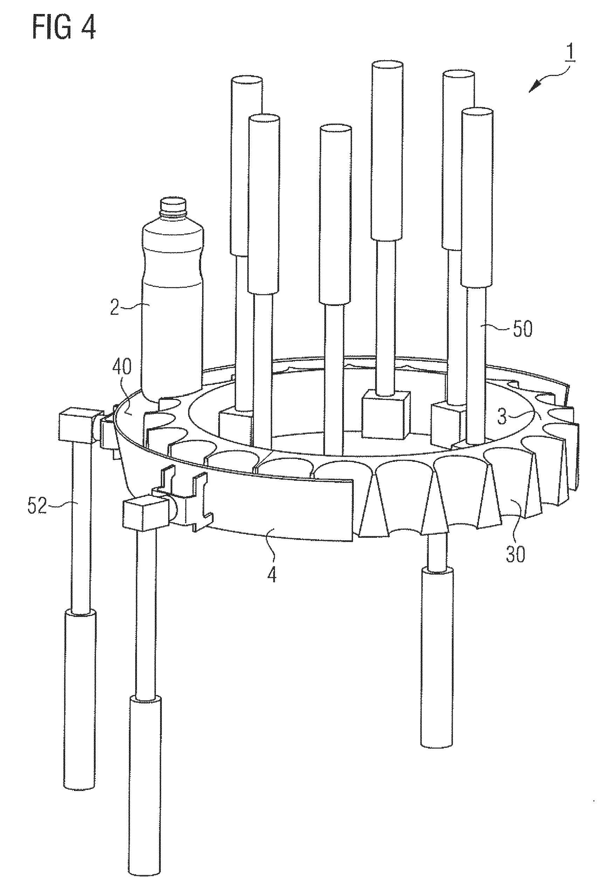

In den Figuren 4 bis 6 ist eine Vorrichtung 1 in einer weiteren Ausführungsform gezeigt, wobei hier der Führungsstern 3 mit den Behälteraufnahmetaschen 30 so ausgebildet ist, dass die Neigung der Behälteraufnahmetaschen 30 steiler ist, als in der in den Figuren 1 bis 3 gezeigten Ausführungsform. Weiterhin ist die Außenführung 4 hier in Form eines Führungsbleches gezeigt, welches die Führungsfläche 40 bereitstellt.

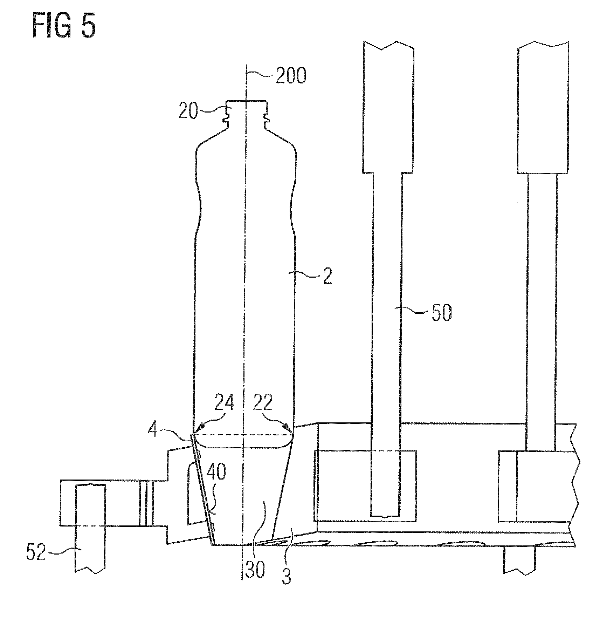

In Figur 5 ist eine schematische Schnittdarstellung durch eine Behälteraufnahmetasche 30 gezeigt. Hier ist zu erkennen, dass die Neigung der Behälteraufnahmetasche 30 der Neigung der Führungsfläche 40 der Außenführung 4 entspricht, und entsprechend in einem Radialschnitt ein im Prinzip symmetrisches "V" ausgebildet wird, in welchem der untere Bereich des Behälters 2 aufgenommen wird. Entsprechend liegen der Kontaktbereich 22 mit der Behälteraufnahmetasche 30 und der Kontaktpunkt 24 mit der Führungsfläche 40 in der gleichen Ebene.

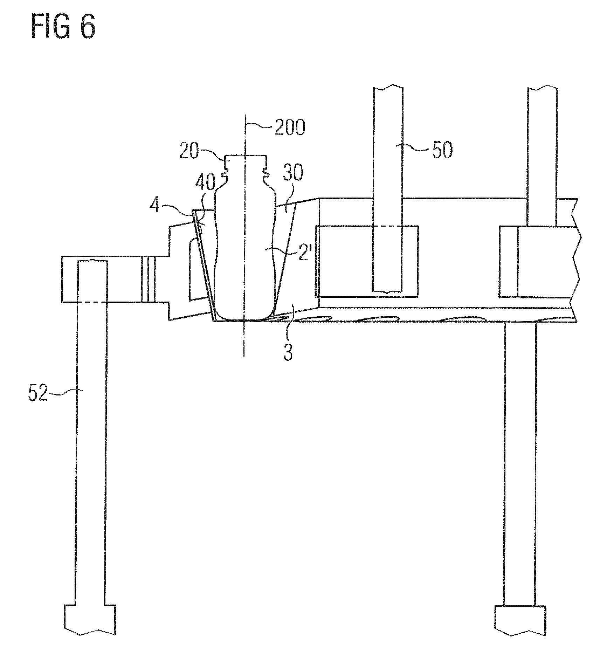

In Figur 6 ist die gleiche Darstellung wie in Figur 5 gezeigt, wobei ein Behälter 2' vorgesehen ist, welcher deutlich andere Dimensionen aufweist, als der in Figur 5 gezeigte. Es ist sofort zu erkennen, dass der Behälter 2' deutlich weiter in die zwischen Behälteraufnahmetasche 30 und Führungsfläche 40 ausgebildete Aufnahme eintaucht. Weiterhin wurde eine Höheneinstellung durch gleichzeitiges Verfahren der Verstellzylinder 50 und 52 und entsprechendes gleichzeitiges Anheben von Führungsstern 3 und Außenführung 4 so erreicht, dass die Mündung 20 des kleinen Behälters 2' auf dem gleichen Niveau liegt, wie die Mündung 20 des großen Behälters aus Figur 5. Weiterhin kann über eine Einstellung der Höhe der Außenführung 4 relativ zum Führungsstern 3 eine exakt auf dem Teilkreis liegende Ausrichtung der Behälterachse 200 für unterschiedlich dimensionierte Behälter 2, 2' erreicht werden, so dass eine sichere Führung der unterschiedlichen Behälter 2, 2' im Bodenbereich erreicht werden kann.

Bezüglich der Neigungen der Behälteraufnahmetasche 30 sowie der Führungsfläche 40 der Außenführung sind die in den Figuren 1 bis 3 sowie Figuren 4 bis 6 gezeigten Varianten bevorzugt. Beispielsweise kann eine Neigung für die Behälteraufnahmetasche mit einer Steigung 1:5, was einer Neigung von 11,31° gegenüber der Drehachse 300 der Vorrichtung 1 entspricht, ausgebildet sein, so wie in den Figuren 1 bis 3 gezeigt. Die deutlich steilere Ausbildung, welche in den Figuren 4 bis 6 gezeigt ist, ist jedoch ebenfalls vorteilhaft, um eine sichere Seitenführung zu erreichen.

Je steiler die entsprechende Kegelstumpffläche der Behälteraufnahmetasche 30 ist, also je kleiner der Winkel zur Drehachse 300 ist, desto mehr Höhendifferenz muss entsprechend überwunden werden, um unterschiedliche Behälterdurchmesser aufnehmen zu können. Entsprechend steigt bei einer steileren Ausführung der Behälteraufnahmetasche 30 auch die Dicke des Führungssternes 3 an, wenn das gleiche Behälterspektrum aufgenommen werden soll. Wenn die Neigung der Behälteraufnahmetasche 30 hingegen flacher und entsprechend ein relativ dünner Führungsstern 3 verwendet werden kann, dann wird jedoch ab einem bestimmten Punkt eine sichere Innenführung nicht mehr gegeben sein, da dann der Winkel für eine Führung in der Ebene des Führungssterns 3 zu flach wird. Ein dünner Führungsstern 3 bringt jedoch auch einen geringeren Materialaufwand und eine geringere Masse und damit ein geringeres Trägheitsmoment mit sich, was sich positiv auf die Effizienz und die Steuerbarkeit auswirken kann.

Im Bereich der Außenführung 4 beziehungsweise der Führungsfläche 40 ist diese bevorzugt relativ steil angeordnet, um zum einen den Behälter 2 in einem Bereich zu führen, in welchem eine Rotationssymmetrie vorliegt, um hier einen definierten Führungspunkt zu erreichen, und zum anderen um zu verhindern, dass der Behälter 2 aufgrund der Fliehkräfte verrutscht.

Entsprechend muss eine Optimierung auf Grundlage der unterschiedlichen Randbedingungen stattfinden, um die optimalen Neigungen der Behälteraufnahmetaschen 30 und der Führungsfläche 40 der Außenführung 4 zu erreichen.

Beispielsweise bei den Petaloidflaschen, welche in den Figuren 1 bis 3 gezeigt sind und welche entsprechend an ihrem Boden fünf Füße aufweisen, könnte eine nicht rotationssymmetrische Aufnahme stattfinden, wenn die Außenführung 4 oder die Behälteraufnahmetasche 30 mit nur einem der Füße in Kontakt kommt. Entsprechend ist es durch eine steilere Ausbildung der Führungsfläche 40 der Außenführung 4 erreichbar, dass der Kontaktpunkt 24 nicht zwischen der Führungsfläche 40 und einem Fuß, sondern zwischen der Führungsfläche 40 und einem darüber angeordneten rotationssymmetrischen Bereich des Behälters 2 liegt.

Entsprechend wird die Führungsfläche 40 der Außenführung 4 bevorzugt steiler ausgebildet als die Behälteraufnahmetaschen 30. Hier ist dann jedoch ein unterschiedliches Verfahren des Führungssterns 3 sowie der Außenführung 4 vonnöten, wenn unterschiedliche Behälterdurchmesser aufgenommen werden sollen, um eine Ausrichtung der Behälterachse 200 mit dem Teilkreis beizubehalten. In der in Figur 1 gezeigten Ausführungsform ist entsprechend ein weiteres Verfahren der Außenführung 4 notwendig, um einen geringeren Hub des Führungssternes 3 auszugleichen.

Der in den gezeigten Ausführungsformen vorliegende Öffnungswinkel der Behälteraufnahmetaschen 30 liegt bei ca. 180°. Entsprechend lassen sich die Behälter 2 bei der Übergabe einfach in die Behälteraufnahmetaschen 30 einbringen. Bei einem Öffnungswinkel von 180° liegt auch die Außenkante beziehungsweise der Umfang des Führungssterns 3 im Wesentlichen auf dem Teilkreis, so dass hier eine einfache Geometrie erreicht werden kann.

Um Material zu sparen, kann es jedoch bevorzugt sein, zwischen zwei Behälteraufnahmetaschen 30 Material zu entfernen. In den in den Figuren 1 bis 6 gezeigten Ausführungsformen des Führungssterns 3 wird jedoch durch die gezeigten Ausführungen erreicht, dass die Anzahl der Oberflächen so gering wie möglich gehalten wird, um eine einfachere Reinigung zu ermöglichen.

Die Öffnungswinkel der Behälteraufnahmetaschen 30 können jedoch auch über 180° hinaus vergrößert werden, so dass dann die Mittelachsen der Behälteraufnahmetaschen 30, welche mit den Behälterachsen 200 zusammenfallen, bezüglich der Außenkante beziehungsweise des Umfangs des Führungssterns 3 nach außen wandern. Die Behälteraufnahmetaschen 30 können jedoch nur mit einem so großen Öffnungswinkel versehen werden, dass die Behälter 2 noch sicher gehalten werden. Bei Behältern mit rotationssymmetrischen Böden kann der Öffnungswinkel recht groß gemacht werden, ohne Führungsstabilität einzubüßen. Bei Behältern 2 mit unsymmetrischen Flaschenböden jedoch, beispielsweise bei den gezeigten Petaloidflaschen, welche fünf regelmäßig verteilte Füße aufweisen, darf der Öffnungswinkel nur so groß sein, dass zumindest zwei der Füße Kontakt mit dem Führungsstern 3 haben. Entsprechend sollte der Öffnungswinkel nicht größer als 216° sein. Diese Betrachtung hängt aber schlussendlich von den jeweilig verwendeten Behältern 2 ab.

Weiterhin wäre es auch möglich, die Mittelachsen der Behälteraufnahmetaschen 30 weiter radial nach innen zu rücken, derart, dass der Öffnungswinkel kleiner als 180° wird. Hierdurch kann die Führung durch den Führungsstern 3 um eine Außenführungskomponente erweitert werden. Es muss jedoch darauf geachtet werden, dass bei der Übergabe der Behälter an den Führungsstern 3 kein Höhenunterschied überwunden werden muss, um die Flaschen in die Führungstaschen 30 einzubringen, da sonst ein aufwändiger Übergabeprozess notwendig wird.

In einer weiteren Variante können die Flaschen jedoch auch quasi von oben in die jeweiligen Führungstaschen eingesetzt werden.

In einer in den Figuren nicht gezeigten Ausführungsvariante ist vorgesehen, die Vorrichtung zum Führen von Behältern mit dem Führungsstern 3, welcher die sich verjüngenden Behälteraufnahmetaschen 30 aufweist, sowie der Außenführung 4 mit der sich verjüngenden beziehungsweise konischen Führungsfläche 40, in einer um 180° gedrehten Anordnung bezüglich einer senkrecht zur Drehachse 300 stehenden Ebene zu verwenden, um dann Behälter im Bereich des Halses beziehungsweise im Bereich des Übergangs vom Hals zum Rumpf des Behälters zu führen. In dieser Ausführungsform werden die Behälter dann auf einer festen Bodenfläche beziehungsweise einer festen Bodenabstützung geführt.

Soweit anwendbar können alle einzelnen Merkmale, die in den einzelnen Ausführungsbeispielen dargestellt sind, miteinander kombiniert und/oder ausgetauscht werden, ohne den Bereich der Erfindung zu verlassen.

Im Folgenden werden besonders bevorzugte Ausführungsformen als nummerierte Absätze dargestellt:
1. Vorrichtung 1 zum Führen von Behältern 2, 2' in einer Abfüllanlage, bevorzugt zum Führen von Flaschen in einer Getränkeabfüllanlage, umfassend einen Führungsstern 3 mit mindestens einer Behälteraufnahmetasche 30 zur Aufnahme eines Behälters 2, 2', wobei der Führungsstern 3 um eine Drehachse 300 drehbar ist, wobei sich die mindestens eine Behälteraufnahmetasche 30 in Richtung der Drehachse 300 verjüngt.
2. Vorrichtung 1 gemäß Absatz 1, wobei die Behälteraufnahmetasche 30 im Wesentlichen konisch ist.
3. Vorrichtung 1 gemäß Absatz 1 oder 2, wobei der Führungsstern 3 in Richtung der Drehachse 300 so ausgedehnt ist, dass in der Behälteraufnahmetasche 30 Behälter 2, 2' mit mindestens zwei unterschiedlichen Durchmessern gehalten werden können.
4. Vorrichtung 1 gemäß einem der vorstehenden Absätze, wobei die Behälteraufnahmetasche 30 Kegelstumpfflächen mit einer Steigung von 1:5 aufweist und/oder eine Neigung von 10° bis 12°, bevorzugt von 11,31°, gegenüber der Drehachse 300 aufweist.
5. Vorrichtung 1 gemäß einem der vorstehenden Absätze, wobei eine Außenführung 4 mit einer Führungsfläche 40 zur Führung des Behälters 2, 2' in der Behälteraufnahmetasche 30 konzentrisch in mindestens einem Abschnitt um den Führungsstern 3 herum angeordnet ist, bevorzugt in einem Abschnitt, welcher dem Behandlungswinkel entspricht.
6. Vorrichtung 1 gemäß Absatz 5, wobei die Führungsfläche 40 gegenüber der Drehachse 300 geneigt, und bevorzugt konisch ausgebildet, ist.
7. Vorrichtung 1 gemäß Absatz 5 oder 6, wobei die Führungsfläche 40 der Außenführung 4 die gleiche Neigung aufweist, wie die Behälteraufnahmetasche 30.
8. Vorrichtung 1 gemäß Absatz 5 oder 6, wobei die Neigung der Behälteraufnahmetasche 30 geringer ist, als die Neigung der Führungsfläche 40 der Außenführung 4.
9. Vorrichtung 1 gemäß einem der Absätze 5 bis 8, wobei die Außenführung 4 eine auf die Behälteraufnahmetaschen 30 vorgespannte Führungsfläche 40 aufweist, welche den Behälter 2, 2' in der Behälteraufnahmetasche 30 führt, wobei die Führungsfläche 40 bevorzugt flexibel und/oder federnd gelagert ist.
10. Vorrichtung 1 gemäß einem der vorstehenden Absätze, wobei die Behälteraufnahmetasche 30 einen Öffnungswinkel von 160° bis 240°, bevorzugt von 180° bis 220°, besonders bevorzugt von 180° oder 216°, aufweist.
11. Vorrichtung 1 gemäß einem der vorstehenden Absätze, wobei der Führungsstern 3 sowie die Außenführung 4 unabhängig voneinander entlang der Drehachse 300 verschiebbar sind, bevorzugt mittels Spindeltrieben.
12. Vorrichtung 1 gemäß einem der vorstehenden Absätze, wobei die Behälteraufnahmetasche 30 des Führungssterns 3 zur Aufnahme des Bodenbereichs eines Behälters 2, 2' ausgelegt ist.
13. Vorrichtung 1 gemäß einem der vorstehenden Absätze, wobei die Behälteraufnahmetasche 30 des Führungssterns 3 zur Aufnahme eines Halsbereichs eines Behälters 2, 2' vorgesehen ist.
14. Vorrichtung 1 gemäß einem der vorstehenden Absätze, wobei über dem Führungsstern 3 eine Halsführung 6 zur Führung eines in einer Behälteraufnahmetasche 30 angeordneten Behälters 2, 2' an dessen Halsbereich vorgesehen ist und der Führungsstern 3 den Behälter 2, 2' an dessen Rumpfbereich führt.
15. Vorrichtung 1 gemäß Absatz 14, wobei der Führungsstern 3 und/oder die Außenführung 4 relativ zur Halsführung 6 entlang der Drehachse 300 verschiebbar sind.

### Bezugszeichenliste

- 1: Vorrichtung zum Führen von Behältern
- 2, 2': Behälter
- 20: Mündung
- 22: Kontaktbereich mit der Behälteraufnahmetasche
- 24: Kontaktpunkt mit der Außenführung
- 200: Behälterachse

- 3: Führungsstern
- 3', 3": Segment des Führungssterns
- 30: Behälteraufnahmetasche
- 32: Oberseite des Führungssterns
- 34: Stoß zwischen den Segmenten des Führungssterns
- 300: Drehachse des Führungssterns

- 4: Außenführung
- 40: Führungsfläche

- 50: Stellzylinder
- 52: Stellzylinder

- 6: Halsführung
- 60: Halsführungsstern
- 62: Aufnahmetasche
- 64: Außenführung

- r: Radius zwischen Behälterachse und Behälteraufnahmetasche

## Patentansprüche

1. Vorrichtung (1) zum Führen von Behältern (2, 2') in einer Abfüllanlage, bevorzugt zum Führen von Flaschen in einer Getränkeabfüllanlage,
**dadurch gekennzeichnet, dass**
eine Außenführung (4) mit einer geneigten Führungsfläche (40) zur Führung der Behälter (2, 2") vorgesehen ist.

2. Vorrichtung (1) gemäß Anspruch 1, **gekennzeichnet durch** einen Führungsstern (3) mit mindestens einer Behälteraufnahmetasche (30) zur Aufnahme eines Behälters (2, 2'), wobei der Führungsstern (3) um eine Drehachse (300) drehbar ist und sich die mindestens eine Behälteraufnahmetasche (30) in Richtung der Drehachse (300) verjüngt.

3. Vorrichtung (1) gemäß Anspruch 2, **dadurch gekennzeichnet, dass** die Behälteraufnahmetasche (30) im Wesentlichen konisch ist.

4. Vorrichtung (1) gemäß Anspruch 2 oder 3, **dadurch gekennzeichnet, dass** der Führungsstern (3) in Richtung der Drehachse (300) so ausgedehnt ist, dass in der Behälteraufnahmetasche (30) Behälter (2, 2') mit mindestens zwei unterschiedlichen Durchmessern gehalten werden können.

5. Vorrichtung (1) gemäß einem der vorstehenden Ansprüche, **dadurch gekennzeichnet, dass** die Behälteraufnahmetasche (30) Kegelstumpfflächen mit einer Steigung von 1:5 aufweist und/oder eine Neigung von 10° bis 12°, bevorzugt von 11,31°, gegenüber der Drehachse (300) aufweist.

6. Vorrichtung (1) gemäß einem der vorstehenden Ansprüche, **dadurch gekennzeichnet, dass** eine Außenführung (4) mit einer Führungsfläche (40) zur Führung des Behälters (2, 2') in der Behälteraufnahmetasche (30) konzentrisch in mindestens einem Abschnitt um den Führungsstern (3) herum angeordnet ist, bevorzugt in einem Abschnitt, welcher dem Behandlungswinkel entspricht.

7. Vorrichtung (1) gemäß Anspruch 6, **dadurch gekennzeichnet, dass** die Führungsfläche (40) gegenüber der Drehachse (300) geneigt, und bevorzugt konisch ausgebildet, ist.

8. Vorrichtung (1) gemäß Anspruch 6 oder 7, **dadurch gekennzeichnet, dass** die Führungsfläche (40) der Außenführung (4) die gleiche Neigung aufweist, wie die Behälteraufnahmetasche (30).

9. Vorrichtung (1) gemäß Anspruch 6 oder 7, **dadurch gekennzeichnet, dass** die Neigung der Behälteraufnahmetasche (30) geringer ist, als die Neigung der Führungsfläche (40) der Außenführung (4).

10. Vorrichtung (1) gemäß einem der Ansprüche 6 bis 9, **dadurch gekennzeichnet, dass** die Außenführung (4) eine auf die Behälteraufnahmetaschen (30) vorgespannte Führungsfläche (40) aufweist, welche den Behälter (2, 2') in der Behälteraufnahmetasche (30) führt, wobei die Führungsfläche (40) bevorzugt flexibel und/oder federnd gelagert ist.

11. Vorrichtung (1) gemäß einem der vorstehenden Ansprüche, **dadurch gekennzeichnet, dass** die Behälteraufnahmetasche (30) einen Öffnungswinkel von 160° bis 240°, bevorzugt von 180° bis 220°, besonders bevorzugt von 180° oder 216°, aufweist.

12. Vorrichtung (1) gemäß einem der vorstehenden Ansprüche, **dadurch gekennzeichnet, dass** der Führungsstern (3) sowie die Außenführung (4) unabhängig voneinander entlang der Drehachse (300) verschiebbar sind, bevorzugt mittels Spindeltrieben.

13. Vorrichtung (1) gemäß einem der vorstehenden Ansprüche, **dadurch gekennzeichnet, dass** die Behälteraufnahmetasche (30) des Führungssterns (3) zur Aufnahme des Bodenbereichs eines Behälters (2, 2') ausgelegt ist.

14. Vorrichtung (1) gemäß einem der vorstehenden Ansprüche, **dadurch gekennzeichnet, dass** die Behälteraufnahmetasche (30) des Führungssterns (3) zur Aufnahme eines Halsbereichs eines Behälters (2, 2') vorgesehen ist.

15. Vorrichtung (1) gemäß einem der vorstehenden Ansprüche, **dadurch gekennzeichnet, dass** über dem Führungsstern (3) eine Halsführung (6) zur Führung eines in einer Behälteraufnahmetasche (30) angeordneten Behälters (2, 2') an dessen Halsbereich vorgesehen ist und der Führungsstern (3) den Behälter (2, 2') an dessen Rumpfbereich führt, wobei vorzugsweise der Führungsstern (3) und/oder die Außenführung (4) relativ zur Halsführung (6) entlang der Drehachse (300) verschiebbar sind.
